# EUROPEAN PATENT APPLICATION

(11) **EP 4 279 803 A1**
(43) Date of publication of application: **22.11.2023**
(21) Application number: 22188193.1
(22) Date of filing: 02.08.2022
(51) Int. Cl.: F21V 8/00

(54) **A LIGHT EMITTING DEVICE THAT ACHIEVES A LIGHT SCREEN EFECT AND AN ATMOSPHERE LIGHT ASSEMBLY EQUIPPED WITH SUCH LIGHT EMITTING DEVICE**

(30) Priority: 18.05.2022 CN 202221202002 U
(71) Applicant: Yanfeng Plastic Omnium Automotive Exterior Systems Co., Ltd., Shanghai 201805 (CN); Yanfeng Plastic Omnium (Shenyang) Automotive Exterior Systems Co., Ltd., Shenyang, Liaoning 110143 (CN); Compagnie Plastic Omnium SE, 69007 Lyon (FR)
(72) Inventor: XU, Jie, Shanghai, 201805 (CN); ZHOU, Dong, Shanghai, 201805 (CN); WANG, Qingyun, Shanghai, 201805 (CN); YANG, Suo, Shanghai, 201805 (CN)
(74) Representative: LLR

(57) **Abstract**

The present invention relates to a light emitting device that achieves a light screen effect, comprising a light source (1) and a light guide (2). The light guide (2) is an elongated part, the light source (1) being arranged at one axial end of the light guide (2), the light guide (2) having an uneven emitting surface (4), wherein the light emitted by the light source (1) enters into the light guide (2) and is reflected/refracted with a set pattern on a corresponding curved or flat face, thereby forming a bright and dark pattern of light and shade. The light guide (2) has an uneven emitting surface (4) capable of reflecting/refracting light on a reflecting curved face and/or a LENS face inside a grille, such that a user can see the light reflected/refracted, which is bright and dark pattern of light and shade, from the outside of an automobile

## Description

### FIELD OF THE INVENTION

The present invention relates to the field of automobile interior and exterior decorations, and in particular, relates to a light emitting device that achieves a light screen effect and an atmosphere light assembly equipped with such light emitting device.

### BACKGROUND OF THE INVENTION

The exterior of an automobile plays an important role. With the development of more atmosphere lights, most of the interior and exterior atmosphere lights are means such as light guides, light equalizers, lens and etc. These means have relatively limited light emitting forms and effects, which are generally lights in the form of spot, line, facets. In addition, due to the limitation of the light emitting forms, a dynamically changing light effect can only be achieved by adjusting the brightness of LED beads, which does not provide good display effects and is difficult to meet the requirements of a light screen effect of automobile lighting.

### SUMMARY OF THE INVENTION

The present invention aims to provide a light emitting device that achieves a light screen effect to solve the above-described problems. By reflecting/refracting light with a set pattern on a curved or flat face by means of a specific light guide with a specific texture and/or pattern, the light emitting device can form a bright and dark pattern of light and shade.

The objective of the invention is achieved by means of the following technical solutions:
A light emitting device that achieves a light screen effect, comprising a light source and a light guide, the light guide being an elongated part, the light source being arranged at one axial end of the light guide, the light guide having an uneven emitting surface, wherein the light emitted by the light source enters into the light guide and is reflected or refracted with a set pattern on a corresponding curved or flat face, thereby forming a bright and dark pattern of light and shadow.

The expression "an elongated part" should be understood as a part having an axial dimension greater than its other dimensions.

The expression "uneven emitting surface" should be understood as a non-uniform surface having a non-uniform boundary, colour, pattern, transparency and/or texture. However, the variation of the boundary, colour, pattern, transparency and/or texture could be regular or irregular. For example, the emitting surface is rough, which means that it has a non-uniform boundary.

The light guide of the present invention has an uneven emitting surface capable of reflecting/refracting light on a reflecting curved face and/or a LENS face inside a grille, such that a user can see the light reflected/refracted, which is bright and dark pattern of light and shade, from the outside of an automobile.

Further, the emitting surface is for example textured, grained, unpolished, grooved, waved and/or embossed.

The uneven emitting surface is for example smooth. "The uneven emitting surface is smooth" should be understood that the emitting surface is free from roughness and has a uniform boundary. In this case, the emitting surface is patterned or the light guide comprises particles, mixed materials, colours or variable transparency, such that the light guide is capable to alter the direction, brightness and/or colour of light.

Further, the light guide is in the form of column, rectangular column, bar, plate or any other irregular shape.

Further, the light guide has a variable thickness.

Further, the light guide is made of at least one material selected from a transparent material, a partially translucent colourless material and a partially translucent coloured material., the transparent material can be, for example, PC, PMMA, silicone, glass, or any suitable light guide material.

Further, the light guide comprises particles such as fibres, flakes, glitters for achieving a sparkling effect.

Further, the light guide is of a solid or hollow structure.

Further, the emitting surface of the light guide has a regular pattern or an irregular pattern for example a marbled pattern. For example, a milky light white material and a blue colorant additive are not well mixed together before moulding to get a marbled effect.

Further, the light source is one or more LED beads, and an incident point of the light source is at a lateral face of the light guide.

The light source emits light with changeable colours and/or changeable brightness.

Further, a lens is arranged between the light source and the light guide.

Further, the light guide moves relative to its corresponding reflecting curved or flat face.

Further, the light guide is connected to a displacement mechanism driving the movement of the light guide, the displacement mechanism comprising a rotation mechanism, a translation mechanism and/or a four-bar linkage mechanism, such that the light guide moves in a continuous or non-continuous rotation combined or alternated with a translation. For example, a rotation with changeable speed or direction, with jerk and/or a helical rotation.

An atmosphere light assembly equipped with the light emitting device, comprising a grille, at the bottom of which is mounted the light emitting device, a reflecting curved face being provided inside the grille, wherein the light is reflected/refracted with a set pattern on the reflecting curved face.

Compared to the prior art, the present invention presents the following beneficial effects:
In the present invention, by providing a light guide with an uneven emitting surface, the light emitted by an external light source enters into the light guide and is reflected/refracted with a set pattern on a corresponding curved face or a flat face, thereby forming a bright and dark pattern of light and shade. Compared to the existing monotonous interior or exterior atmosphere lights, the present structure can achieve the effect of a bright and dark pattern of light and shade with more variations and greatly improve the grade of an automobile atmosphere light.

### BRIEF DESCRIPTION OF THE DRAWINGS

Fig. 1 is a schematic structural view of the present light emitting device;
Fig. 2 is a schematic view of the atmosphere light assembly;
Fig. 3 is a schematic structural view of the present light emitting device used in an atmosphere light assembly;
Fig. 4 is a schematic structural view of the principles of the present light emitting device;
Fig. 5 is a schematic view of the effect of the present light emitting device;

Wherein: 1: the light source; 2: the light guide; 3: the light entry; 4: the emitting surface; 5: the atmosphere light assembly.

### DETAILED DESCRIPTION OF THE EMBODIMENTS

The present invention will be described in detail below in connection with the accompanying drawings and detailed embodiments.

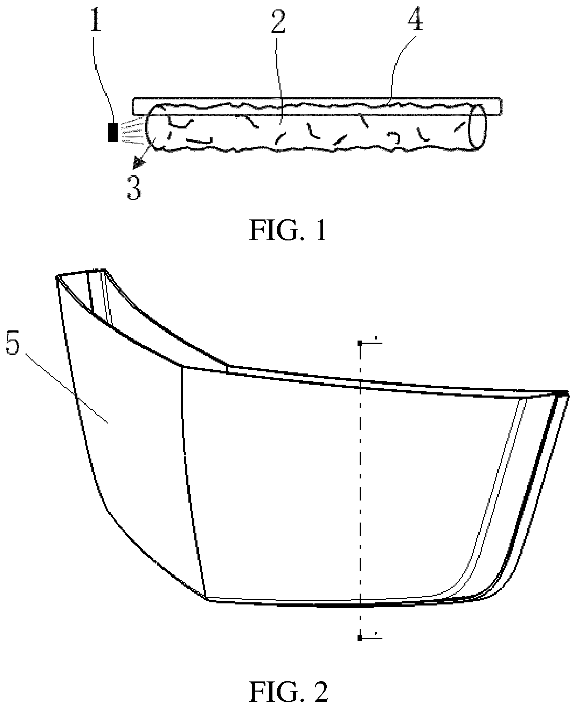

As shown in Fig. 1, a light emitting device that achieves a light screen effect comprises a light source 1 and a light guide 2, wherein, the light guide 2 is an elongated rod, the light source 1 is arranged at one end of the light guide 2 along its axial direction and emits light into the light guide 2 via a light entry 3 of the light guide, the light guide 2 has an uneven emitting surface 4. The light emitted by the light source 1 enters into the light guide 2 and is reflected/refracted with a set pattern on a corresponding curved face or flat face, thereby forming a bright and dark pattern of light and shadow. As the light guide 2 has an uneven emitting surface which is an irregular and rough surface, the light can be reflected/refracted on a reflecting curved face and a LENS face inside a grille, such that a user can see the light reflected/refracted, which is a bright and dark pattern of light and shade, from the outside of an automobile.

The light enters into the light guide 2 and is emitted via the lateral face extending along the axial direction (i.e., the emitting surface 4) of the light guide 2, the emitting surface 4 having unevenness. For example, the emitting surface 4 has an irregular boundary. Once the light passes through such emitting surface 4, its direction, brightness and/or even colour can be changed, and the light is reflected/refracted with a set pattern on its corresponding curved or flat face.

In a preferred embodiment, the light guide 2 can be provided in the form of a light guide column, a light guide bar, or a light guide plate. For example, in the present embodiment, the light guide 2 is in the form of a light guide column.

In a preferred embodiment, the light guide 2 is made of a transparent material allowing light transmission, which can be, for example, PC, PMMA, silicone, glass, or any suitable light guide material.

In a preferred embodiment, the light guide 2 is of a solid or hollow structure, more preferably, of a hollow structure.

In a preferred embodiment, the emitting surface of the light guide 2 has a regular pattern or an irregular pattern, enabling the light transmitting through the light guide to present a bright and dark light and shadow effect.

In a preferred embodiment, the light source 1 is one or more LED beads, and an incident point of the light source 1 is at a lateral face of the light guide column 2.

In a preferred embodiment, a lens is provided between the light source 1 and the light guide 2. The light source arranged at a light entry of the lens allows to further enhance the light and shade effect.

In a preferred embodiment, the light guide 2 moves relative to its corresponding reflecting curved face. In a preferred embodiment, the light guide is connected to a displacement mechanism driving the movement of the light guide. The displacement mechanism comprises a rotation mechanism, a translation mechanism or a four-bar linkage mechanism. The movement mode used in the present invention is not limited. For example, in order to achieve different movement effects, an electric motor and a gear transmission can be used for driving, a plurality of driving rods can also be used. The driving mode can also be a strut drive or a worm drive, or any other driving mode, as long as it allows the light guide to move relative to the reflecting curved face.

As shown in Fig. 2 to 3, an atmosphere light assembly 5 equipped with the above-described light emitting device comprises a grille, at the bottom of which is equipped with the light emitting device and a reflecting curved face is provided inside the gill. The light is reflected/refracted with a set pattern on the reflecting curved face. The light guide of the present solution is horizontally arranged at the bottom of the grille, and it can also be arranged with any angle, direction or position. The number of the light guide can also vary, and a parallel plurality of light guides can be used so as to combine lights and shadows coming from different light guides.

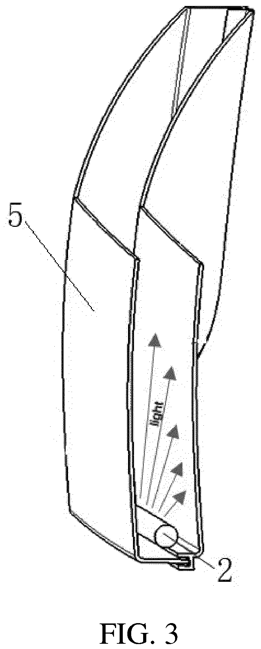

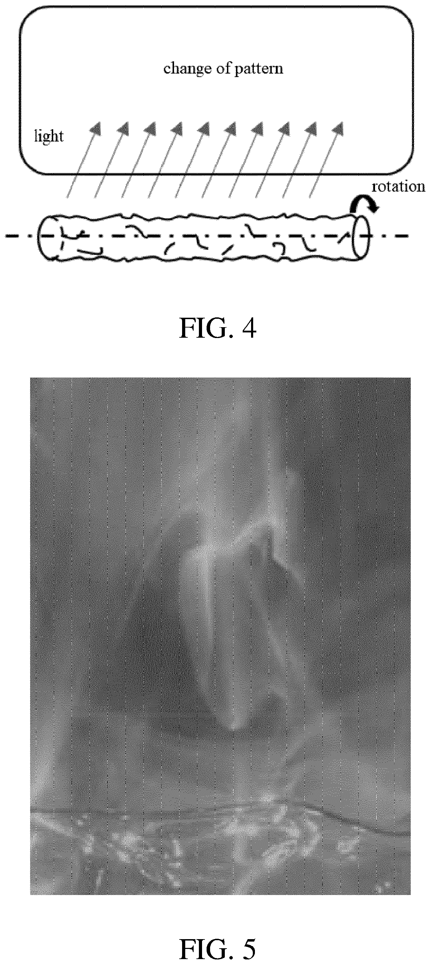

A particular light emitting mode is shown in Fig. 3 to 4. A circular light guide column is employed at the bottom of a grille of an automobile. A light source (one or more LED beads) is at a lateral face of the light guide column. The light emitted by the light source enters into the light guide column via a light entry of the light guide column. The light guide column having a surface with an uneven, rough and irregular texture reflects/refracts the light on a reflecting curved face and a LENS face inside the grille, such that a user can see the light reflected/refracted, which is a bright and dark pattern of light and shadow, from outside of an automobile. On the basic of the light emitting mode in this solution, a rotation mechanism or a mixed movement mechanism such as a translation or a four-bar linkage can be added at the axis of the light guide. Or the reflecting curved face/LENS is movable such that the light guide and the reflecting curved face/LENS face can move relative to each other and that the line pattern on the light screen change accordingly, thereby achieving a dynamically changing light effect.

By adjusting the boundary shape, pattern of the emitting surface and/or the movement mode of the light guide, or combining the light and shadow effects of a plurality of light guides, the final light emitting effect can be changed. The device according to present invention can be applied to any part that requires a lighting effect other than a grille, for example, a trim light, an interior atmosphere light, a side door, a tail light, etc. The light can also be projected on the ground, a wall, etc.

The above description of embodiments aims to help those skilled in the art to understand and to use the present invention. It will be evident for those skilled in the art to readily make various modifications to these embodiments, and to apply the general principles described herein to other embodiments without using his own inventive ability. Therefore, the present invention is not limited to the above-described embodiments, and improvements and modifications made by those skilled in the art according to the disclosure of the present invention without extending beyond the content of the present invention shall be regarded as falling within the scope of protection of the present invention.

## Claims

1. A light emitting device that achieves a light screen effect, comprising a light source (1) and a light guide (2), **characterized in that**, the light guide (2) is an elongated part, the light source (1) being arranged at one axial end of the light guide (2), the light guide (2) having an uneven emitting surface (4), wherein the light emitted by the light source (1) enters into the light guide (2) and is reflected/refracted with a set pattern on a corresponding curved or flat face, thereby forming a bright and dark pattern of light and shade.

2. The light emitting device that achieves a light screen effect according to claim 1, **characterized in that**, the uneven emitting surface (4) is textured, grained, unpolished, grooved, waved and/or embossed.

3. The light emitting device that achieves a light screen effect according to claim 1, **characterized in that**, the uneven emitting surface (4) is smooth.

4. The light emitting device that achieves a light screen effect according to any one of the preceding claims, **characterized in that**, the light guide (2) is in the form of column, rectangular column, bar, plate or any other irregular shape.

5. The light emitting device that achieves a light screen effect according to any one of the preceding claims, **characterized in that**, the light guide (2) has a variable thickness.

6. The light emitting device that achieves a light screen effect according to any one of the preceding claims, **characterized in that**, the light guide (2) is made of at least one material selected from a transparent material, a partially translucent colourless material and a partially translucent coloured material.

7. The light emitting device that achieves a light screen effect according to any one of the preceding claims, **characterized in that**, the light guide (2) comprises particles such as fibres, flakes, glitters.

8. The light emitting device that achieves a light screen effect according to any one of the preceding claims, **characterized in that**, the light guide (2) is of a solid or hollow structure.

9. The light emitting device that achieves a light screen effect according to any one of the preceding claims, **characterized in that**, the emitting surface (4) of the light guide (2) has a regular pattern or an irregular pattern, for example a marbled pattern.

10. The light emitting device that achieves a light screen effect according to any one of the preceding claims, **characterized in that**, the light source (1) is one or more LED beads, and an incident point of the light source (1) is at a lateral face of the light guide (2).

11. The light emitting device that achieves a light screen effect according to any one of the preceding claims, **characterized in that**, the light source (1) emits light with changeable colours and/or changeable brightness.

12. The light emitting device that achieves a light screen effect according to any one of the preceding claims, **characterized in that**, a lens is arranged between the light source (1) and the light guide (2).

13. The light emitting device that achieves a light screen effect according to any one of the preceding claims, **characterized in that**, the light guide (2) moves relative to its corresponding reflecting curved or flat face.

14. The light emitting device that achieves a light screen effect according to claim 13, **characterized in that**, the light guide (2) is connected to a displacement mechanism driving the movement of the light guide, the displacement mechanism comprising a rotation mechanism, a translation mechanism and/or a four-bar linkage mechanism such that the light guide (2) moves in a continuous or non-continuous rotation combined or alternated with a translation.

15. An atmosphere light assembly (5) equipped with the light emitting device that achieves a light screen effect according to any one of claims 1 to 14, **characterized in that**, the atmosphere light assembly (5) comprises a grille, at the bottom of which is mounted the light emitting device, wherein a reflecting curved face is provided inside the grille, and the light is reflected/refracted with a set pattern on the reflecting curved face.
